(19) Europäisches Patentamt

European Patent Office

Office européen des brevets

(11) Publication number: **0 097 499**
**B1**

# EUROPEAN PATENT SPECIFICATION

(45) Date of publication of patent specification: **23.08.89**

(51) Int. Cl.⁴: **G 06 F 13/00**

(21) Application number: **83303505.8**

(22) Date of filing: **17.06.83**

(54) **Access request control apparatus for a data processing system.**

(30) Priority: **18.06.82 JP 104736/82**
**24.06.82 JP 108775/82**

(43) Date of publication of application:
**04.01.84 Bulletin 84/01**

(45) Publication of the grant of the patent:
**23.08.89 Bulletin 89/34**

(84) Designated Contracting States:
**DE FR GB**

(56) References cited:
**WO-A-81/02210**
**US-A-3 377 579**
**US-A-4 152 764**

**MICROPROCESSORS AND FIRMWARE,
SEVENTH EUROMICRO SYMPOSIUM ON
MICROPROCESSING AND
MICROPROGRAMMING, Paris, 8th-10th
September 1981, pages 34-41, North Holland
Publ. Co., Amsterdam, NL; H. RIAD et al.: "A
distributed virtual support information
exchange system"**

(73) Proprietor: **FUJITSU LIMITED**
**1015, Kamikodanaka Nakahara-ku
Kawasaki-shi Kanagawa 211 (JP)**

(72) Inventor: **Takahashi, Masanori
Fujitsu Ltd. Patent Dpt. 1015, Kamikodanaka
Nakahara-ku Kawasaki-shi Kanagawa. 211 (JP)**
Inventor: **Nishida, Hidehiko Fujitsu Ltd. Patent
Dpt.
1015, Kamikodanaka
Nakahara-ku Kawasaki-shi Kanagawa 211 (JP)**
Inventor: **Koshino, Minoru
Fujitsu Ltd. Patent Dpt. 1015, Kamikodanaka
Nakahara-ku Kawasaki-shi Kanagawa. 211 (JP)**
Inventor: **Hattori, Akira
Fujitsu Ltd. Patent Dpt. 1015, Kamikodanaka
Nakahara-ku Kawasaki-shi Kanagawa. 211 (JP)**

(74) Representative: **Sunderland, James Harry et al
HASELTINE LAKE & CO Hazlitt House 28
Southampton Buildings Chancery Lane
London WC2A 1AT (GB)**

(56) References cited:
**PATENTS ABSTRACTS OF JAPAN, vol. 7, no. 6,
(P-167)1151r, 11 January 1983; & JP - A - 57 164
338 (FUJITSU K.K.) 08-10-1982**

## Description

This invention relates to access request control apparatus for a data processing system.

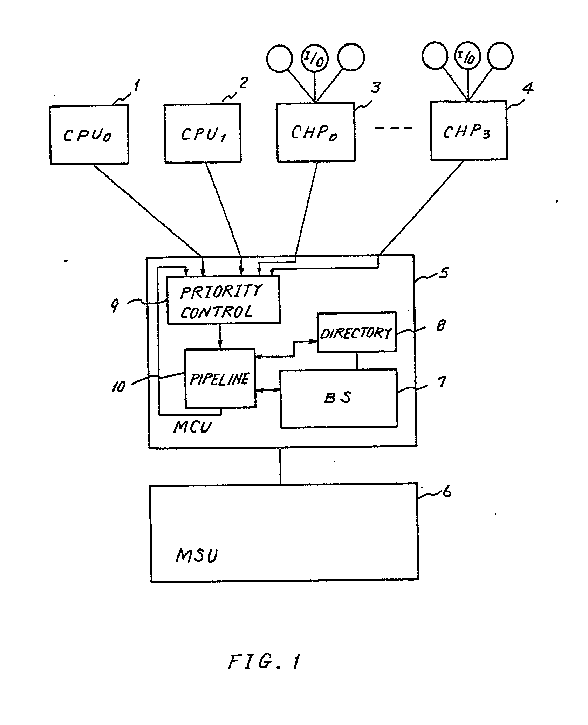

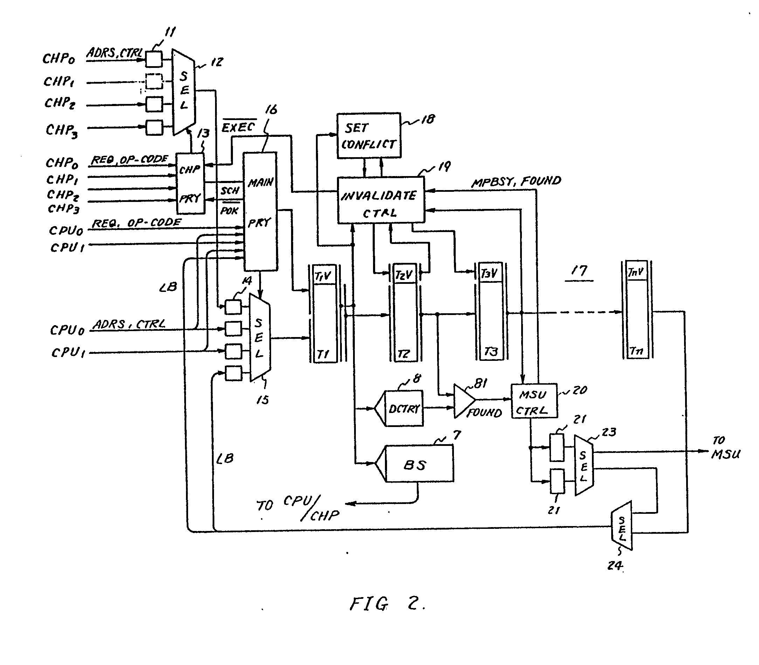

Fig. 1 is a schematic diagram of an example of the structure of a data processing system. In Fig. 1, 1 and 2 are two central processing units $CPU_0$ and $CPU_1$; 3 and 4 are four channel processing units $CHP_0 \sim CHP_3$; 5 is a memory control unit MCU using the pipeline system; 6 is a memory unit MSU; 7 is a buffer memory BS, for example, using a set associative system; 8 is a directory used for controlling the buffer memory BS; 9 is a priority determination circuit; and 10 is a pipeline consisting of multistage registers.

The MCU accepts access requests for the MSU at any time from any of the processing units $CPU_0$, $CPU_1$, $CHP_0 \sim CHP_3$ and executes memory control based on a buffer system using the directory and buffer memory BS.

Here, memory control based on a buffer system means control such that the directory is searched to determine whether or not a data block in respect of which an access request has been issued is in BS; when the block exists in BS, BS is accessed, but if the block does not exist in BS, access is made to the MSU and the pertinent block is loaded into BS, thereafter access being made to BS.

When a plurality of access requests are accepted simultaneously, the priority determination circuit selects one access request according to a constant priority determination theory and the selected access request is executed.

In the priority determination system for access requests, regarding priority as between requests from CHP's and CPU's, requests from CHP's are given higher priority, while regarding priority as between one CPU and another, priority is determined in accordance with a priority determination theory determined for each unit, and an access request from the loop back (described later) should have the highest priority (Japanese laid-open patent No. 164338/1982).

An outline of a priority determination system, and problems arising, will be explained hereunder.

The MCU determines priority when it accepts access requests from a plurality of CHP's and CPU's and executes pipeline processing for the access requests accepted. In accordance with the priority determining method used in the MCU, a first priority determination process determines priority as between CHP's in order to select one access request therefrom, then a second priority determination process determines priority as between the selected CHP access request, access requests relating to the plurality of CPU's and loop back access requests for using the pipeline again. Thereby, one access request is selected. Thereafter, the selected access requests are sequentially input to the pipeline in order, to execute the required processing.

A CHP access request, even if it is selected on the basis of the first priority determination process, may be nullified as explained below.

(1) If the CHP access request collides with an access request sent from the loop back, at the time of determining priority in accordance with the second priority determination process, the loop back access request must be given priority in order that it can use the pipeline again. Accordingly, since the priority of the loop back access request is set higher than that of the CHP access request, the CHP access cannot obtain priority over it and the priority acquired or determined by the first priority determination is nullified.

(2) When a bank of the buffer memory BS to be used by a CHP access is busy by reason of another access being processed by the MCU or when a condition inhibiting access by CHP is being generated for a control reason, the priority determined by the first priority determination process is nullified.

(3) When the data to be accessed into the buffer memory BS is not placed (BUFFER NOT FOUND), after the CHP access which has obtained the priority by the second priority determination is input to the pipeline, the main memory must be accessed. At this time, the access of buffer NOT FOUND which is precedingly processed by the MCU exists in the same number of the main memory access ports, and when the access is being continued to the main memory, the main memory access port becomes busy. When this busy state is detected, the successive pipeline processings are nullified from this timing.

That is, when a CHP access request has obtained priority in the second priority determination process and has been input to the pipeline, and it is found that the data to be accessed in accordance with the CHP access is not present in BS, the main memory must be accessed. If this occurs a number of times an equal number of main memory access ports become busy. When all such ports are busy succeeding CHP access requests requiring access to the main memory are nullified.

(4) When the set address of the buffer memory BS to be used by a preceding access is found to be the same as that to be used by the CHP access, by a set conflict detection function in relation to the buffer memory BS using the set associative system, set conflict occurs and the access to the same set, namely the CHP access, is inhibited and the successive pipeline processings are nullified, and the access to the CHP is started again from the first priority determination. That is, the CHP access attempts again to acquire priority, starting from the first priority determination process.

When a CHP access request which has been nullified attempts again to acquire priority, starting again from the first priority determination process, if it has to compete for priority with other CHP access requests, the CHP access which should certainly be prior processed may sometimes be broken by (may not be given priority over) succeeding CHP accesses. Therefore, there can arise a problem in that the access time of a CHP access request which should naturally have been processed earlier is further lengthened due to the prior processing by the MCU of CHP access requests coming up successively.

Alternatively, a CHP access the priority of which has been nullified in the second priority determination process may not be started again from the first priority determination process. It may be held over to obtain priority in the second priority determination process (held over so as not to compete in the first priority determining process). In such a case, hardware is necessary for holding the access request of which the priority has been nullified and hardware is necessary for a control circuit which judges whether the waiting CHP access or successive net CHP accesses should take part in the second priority determination process.

The logic of first and second priority determination of the above system is always fixed or constant and is not sufficiently flexible.

The access request operations which the MCU can be called upon to process include such things as block access, which require operations to be carried out a plurality of times continuously or consecutively, and loop back access request operations of comparatively low priority, such as a prefetch request, or comparatively high priority, such as error processing. In existing priority determination systems (Japanese Laid-open Patent No. 164338/1982), which use one priority determination pattern, such operational contents, that is, the operational significances of different requests, are all neglected and therefore processings are sometimes performed inefficiently.

Microprocessors and Firmware, seventh Euromicro Symposium on Microprocessing and Microprogramming, Paris, 8—10 September 1981, pages 34—41, North Holland Publn. Co., Amsterdam, H. Riad et al, "A Distributed Virtual Support Information Exchange System", discloses a priority system, for controlling accesses to a common serial bus or line wherein priority allocated to an access request is dynamically changed after each unsuccessful attempt to access the line, to increase the probability of further accesses.

US—A—3 377 579 discloses access control apparatus on which as between I/O channels and CPU access requests, preference is given to I/O channel access requests.

The present invention, as claimed, provides for determination of priority as between a plurality of access requests, and more practically provides a processing system for handling memory access requests from central processing units (CPU's) and channel processing units (CHP's) for example.

In an embodiment of the present invention the priority of a CHP access request, of which the priority has once been nullified, is raised when it takes part in a first priority determination process so that it can overcome (gain priority over) other CHP access requests in such priority determination, thereby to curtail even a very short period of time involved in the access processing time of a CHP access request of which the priority has once been nullified.

An embodiment of the present invention can improve efficiency of access processing by executing priority determination between a competing plurality of access requests more carefully that has previously been the case and can provide a control system for modifying priority in accordance with the natures of different access request operations on the basis of comparatively uniform priority determination theory reset-by hardware.

Reference is made, by way of example, to the accompanying drawings, in which:—

Fig. 1 is a schematic diagram of a data processing system;

Fig. 2 is a schematic block diagram of major parts of a memory control unit MCU in which an embodiment of the present invention is applied;

Fig. 3 is a schematic diagram illustrating a status indication register of an embodiment of the present invention;

Fig. 4 is a schematic status transition table illustrating operational transitions which can occur in embodiments of the present invention;

Fig. 5 is a timing chart illustrating operational timings in an embodiment of the present invention; and

Figs. 6 to 9 are schematic block diagrams of parts of an embodiment of the present invention.

Fig. 2 illustrates the structure of a memory control unit MCU embodying the present invention. In Figure 2, only those parts concerned with the present invention are shown, for convenience of explanation.

Fig. 2, 11 is a CHP port (register), accepting addresses and control signals sent from $CHP_0 \sim CHP_3$. 12 is a CHP selector which is controlled by CHP priority determination circuit. 13 is the CHP priority determination circuit, which selects one access request signal REQ from amongst access request signals REQ from $CHP_0 \sim CHP_3$ and then outputs the selected REQ signal (of the selected CHP-indicated as SCH) for further priority determination with regard to access requests from other access requesting units. The circuit 13 includes state or status indication registers provided respectively for each CHP and thereby the processing conditions of access requests from each CHP, and busy conditions of ports are indicated. Details will be explained later.

14 is a CPU port, accepting addresses and control signals sent from $CPU_0$, $CPU_1$, from the selected channel processing unit SCH and from the loop back LB. 15 is a CPU selector to be controlled by the main priority determination circuit 16, as explained in detail below.

16 is the main priority determination circuit which determines priority as between REQ signals sent from $CPU_0$, $CPU_1$, SCH and LB which all provide inputs to the CPU selector 15. A signal $\overline{POK}$ output from the circuit 16 to the circuit 13 indicates that the SCH is not selected by the main priority determination circuit. 17 is a pipeline consisting of multistage register $T_1$, $T_2$, ..., $T_n$ and $T_1V$, $T_2V$, $T_3V$, are validity signals of each register stage.

18 is a circuit having a set conflict detecting function as explained above. 19 is a nullification control circuit which detects a processing disable condition for a started access request and nullifies the request. When the circuits 18 and 19 indicate a processing continuation disable (NULLIFY) condition, a validity signal inversion takes place and the execution disable signal $\overline{EXEC}$ is output.

Various basic priority determination theories for governing operation of the CHP priority determination circuit 13 can be conceived; for example, priority according to the port number, priority according to a predetermined sequence or priority according to a cyclically changed sequence may be employed. To each of the various possibilities, provision for raising priority in a repeated priority determination with regard to an access request which has been once nullified by $\overline{POK}$ or $\overline{EXEC}$ is added.

The priority determination theory of the main priority determination circuit 16 includes two conditions:— that priority follows the sequence CPU<SCH<LB and also as between CPU's follows the indication of hot and cold flags relating thereto.

81 is a comparison circuit which detects whether or not wanted data exists in BS using the directory. When it exists, 81 generates an output (FOUND). 20 is an MSU access control circuit which sets a request to an MSU access port 21 when BS is NOT FOUND. Moreover, when the plurality of MSU ports are all busy, a signal MP BSY is supplied to the nullification control circuit 19. 23 is a selector which selects any one of the plurality of MSU ports 21 and sends the necessary part of the contents held in the port to the MSU. 24 is a selector operable to select any one of the access requests for MSU access or an access request from the final stage register Tn of the pipeline and then loops it back to the second priority determination means (main priority determination circuit).

When accessing MSU (for example, move-in to BS from MSU), when data is sent from MSU it must be written into BS and the operations involved must also be controlled by the pipeline 17. Therefore, an access request resulting in the generation of an access to MSU must be input again to the pipeline.

Moreover, when an access request, in respect of which data is FOUND, is a block fetch request, the number of bytes transferred by a single access to BS is limited to only $n$ bytes, for example, 8 bytes, and to complete the block fetch access to BS must be effected repeatedly many times continuously or consecutively.

In such cases, it is necessary for an access request to be input again to the pipeline from the final stage of the pipeline.

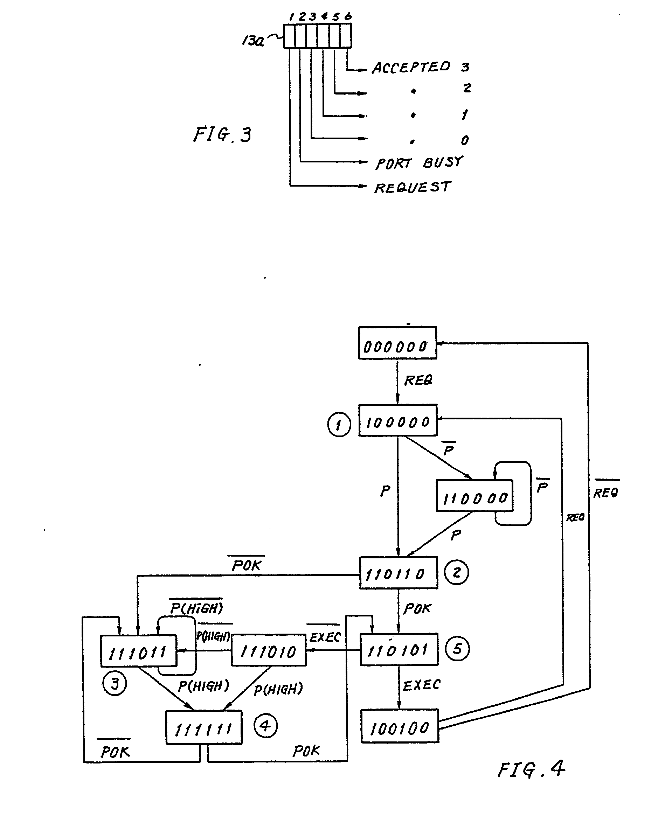

The priority determination process control system used in an embodiment of the present invention for priority nullification of an access request in the CHP priority determination circuit 13 will be explained with reference to Figs. 3 to 5 on the basis of general system configuration of Fig. 2.

Fig. 3 is an example of structure of a status indication register 13a. Such registers are provided in the circuit 13 in respect of each CHP in order to control CHP access requests from each CHP. The first bit of a status indication register is "1" (REQUEST) when an access request is issued from the relevant CHP. The second bit of the register is used to indicate that an access request has already been accepted, that a priority determination process is being executed and that pipeline processing is also being executed and therefore the CHP port 11 is busy (PORT BUSY). The third to sixth bits are used for condition codes indicating the control status of priority determination processing and pipeline processing at the port in relation to the accepted access request (ACCEPTED 0, 1, 2, 3).

Fig. 4 illustrates transitions of status as indicated by a status indication register 13a shown in Fig. 3. A total of nine different statuses are illustrated.

First, the status indication register is in a reset state with contents (000000) and when an access request REQ is accepted by the port 11, its state changes to (100000). At this point, first priority determination processing is carried out in the CHP priority determination circuit 13. When the priority has been determined by such processing, if the access request is selected (P), the state of the register changes to (110110). On the other hand, if the access request is not selected ($\overline{P}$), the register waits in the state (110000) until the access request is selected.

The CHP access request selected in the CHP priority determination circuit 13 then takes part in second priority determination processing in the main priority determination circuit 16.

If the access request is selected therein (POK), the state of the status indication register changes to (110101) and when the access request is executed (EXEC), the state changes to (100100). When a next access request REQ is accepted after such execution, the register state returns to (100000). If next access request is not accepted ($\overline{REQ}$), the state returns to (000000).

However, if the CHP access request is not accepted (selected) in the second priority determination processing ($\overline{POK}$), the state changes to (111011) and a higher priority may be given herein. Therefore, the access request is selected from the first phase (P(High)), the state becomes (111111) and it receives again the processing of the second phase. That is, if the CHP access request is not selected in the second priority determination process, it is given a higher priority for subsequent priority processing. Therefore, in a subsequent first priority determination process this higher priority will result in selection of the request and it will again go forward for second priority determination processing; when the access request is selected (in the second priority determination processing) (POK), the state moves to 110101) again and is executed. However, if it is not selected ($\overline{POK}$), the state returns to (111011) and selection is started again from the first priority processing phase and is repeated until the request is eventually selected in the second phase (POK).

On the other hand, if the CHP access request becomes not executable $\overline{EXEC}$ when the state enters EXEC from (110101), the state changes to (111010). Again, a higher priority is given to the request (P(HIGH)) for subsequent first priority determination processing and therefore it will be selected and the state will change to (111111) in the second phase of priority determination processing. Successive processings are the same as above.

In a case in which access requests from three or more CHP's exists in the MCU, and the continuous access request execution is disable (NULLIFY) and therefore it is required to execute priority determination from the first phase repeatedly, access requests which have been given higher priority (P(HIGH)) compete with one another and accordingly such an access request may not be selected $\overline{(P(HIGH))}$. In this event, since a higher priority is still given (P(HIGH)) to the access request not selected, it is then selected subsequently (P(HIGH)) and receives second phase priority determination processing. In such cases transition of status involves the state changing to (111011) from (111010) without selection of $\overline{(P(HIGH))}$, or involves retention of the state (111011) without selection $\overline{(P(HIGH))}$.

As explained above, an embodiment of this invention provides that it is possible to execute control in such a manner that even if priority is lost in second or subsequent priority determination phases, an access request can be immediately selected when it returns to the first phase.

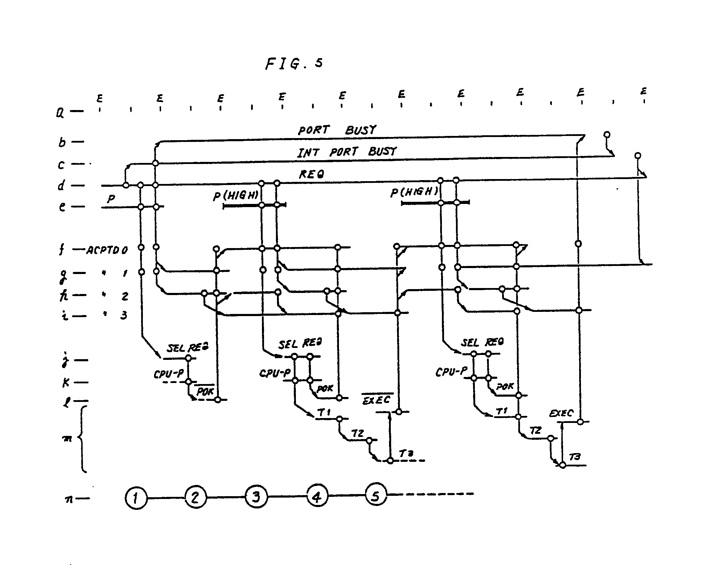

Fig. 5 is a timing chart illustrating an example of the timing of operations and indicates logical conditions for generating the state transitions shown in the status indication table of Fig. 4 and control contents based on the generated status indications. The timing chart has horizontal levels labelled $a$ to $n$.

In Fig. 5, $a$ indicates clock periods; E—E is the clock period of CHP. CPU and MCU clock periods are 1/2 of E—E. $b$ indicates a port (CHP port) busy period. $c$ indicates a port busy period in the MCU. $d$ indicates a period in which an access request exists. $e$ indicates the priority P or P (HIGH) period given in the first priority determination phase. $f$ to $i$ indicate state indication codes with a solid line indicating "2" and a blank indicating "0".

Moreover, $j$ indicates the processing result of the CHP priority determination circuit 13 in the first priority determination phase and SEL REQ indicates that a REQ has been selected. $k$ indicates the processing result CPU-P of the main priority determination circuit 16 in the second priority determination phase. A broken line means the result of negation, whilst a solid line means the results of acknowledgement (a broken line means that the CHP request selected in the first phase has been nullified and a solid line means that it has been selected in the second phase). $l$ indicates the existence or non-existence of the output signal POK or $\overline{POK}$, whilst $m$ indicates operating conditions of the pipeline in accordance with a result of such output signal. $n$ indicates the correspondence of conditions shown in Fig. 5 to statuses shown in Fig. 4.

The circles in Fig. 5 indicate input logical conditions for starting control operations.

Operations started as a result of combinations of logical conditions are indicated by vertical arrow lines.

For example, in ①, (SEL REQ) is output when input conditions REQ="1", P="1", ACPTD 0="0", ACPTD 1="0", occur and simultaneously "1" is set to ACPTD 1 and 2. In ②, it is indicated that the $\overline{POK}$ signal is generated from the combination of conditions SEL REQ="1" and CPU-P="0", namely when a non selection condition arises in the second priority determination phase, and the state code (1011) is generated from $\overline{POK}$ and state code (0110). In ⑤, it is indicated that execution becomes disabled in the $T_3$ stage of pipeline, the $\overline{EXEC}$ signal is generated and the state code is updated to (1010).

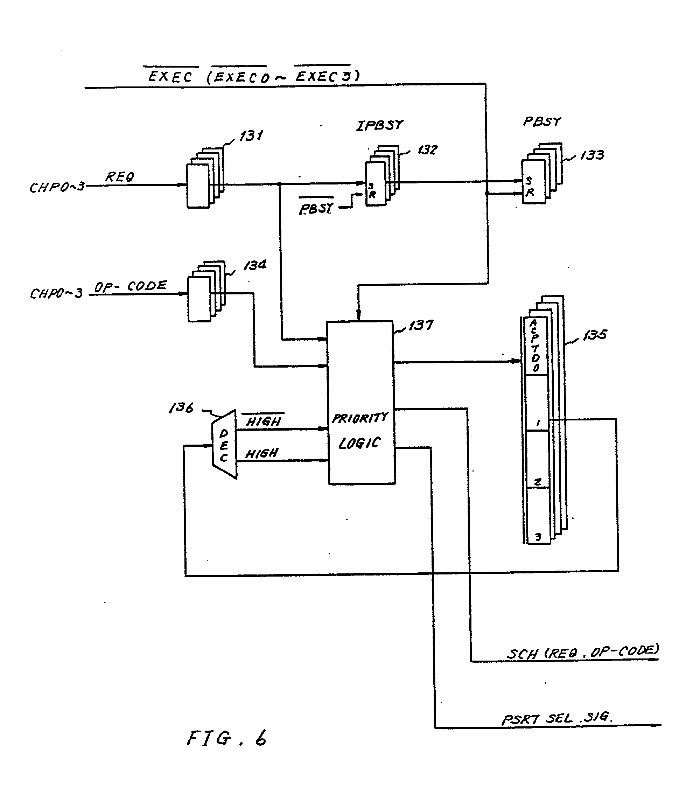

Fig. 6 shows an example of internal circuitry for the CHP priority determination circuit 13. 131 is a 1-bit register which receives a request signal REQ from a CHP; 132 is a set-reset type flip-flop which receives a request signal from register 131 at its set(s) input, and outputs an internal port busy signal IPBSY which is received by a set-reset type flip-flop 133 which outputs a port busy signal PBSY; 134 is a register having a plurality of bits which receives operations codes from the CHP; 135 is a 4-bit register which holds the state indication bits ACCEPTED 0~3. 131, 133, 135 correspond to a state indication register 13a as shown in Fig. 3. Four of each of the registers and flip-flops are certainly provided, in correspondsnce to CHP 0~3. 136 is a decoder which decodes the contents of indication registers 135 and determines whether priority is to be raised to high or not; 137 sends a signal PORT SEL SIG for selecting one CHP in accordance with the output of these registers and decoders, a REQ signal concerning the selected CHP (SCH) and an OP code, and simultaneously controls the state of register 135 as explained with reference to Fig. 4. A practical embodiment of circuit 137 can easily be designed by those who are skilled in the art, on the basis of Fig. 4 and the explanation thereof. The PBSY flip-flop 133 is reset by the $\overline{EXEC}$ signal (actually, there are four signals $\overline{EXEC0}$~$\overline{EXEC3}$ corresponding to four CHP). When PBSY is reset, the IPBSY flip-flop 132 is reset.

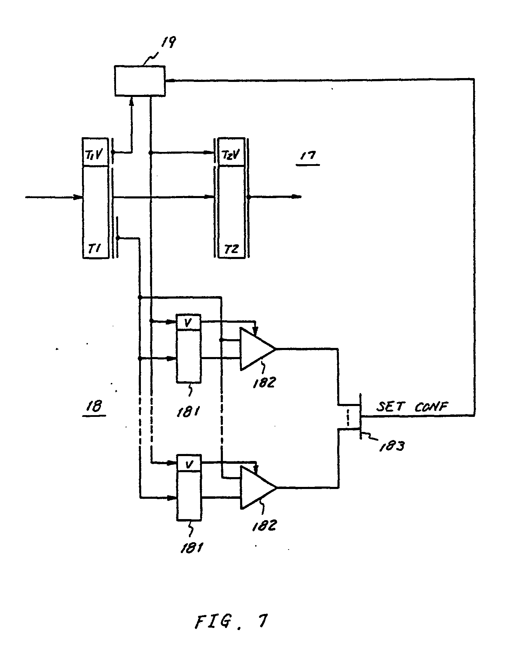

Fig. 7 illustrates in detail the set conflict detection circuit 18 of Fig. 2, including a plurality of address registers 181 which receive address information from the T1 stage of the pipeline and hold that information until the end of access to the buffer memory BS, a plurality of comparators 182 which compare the address information from registers 181 and the address information in the T1 stage, and OR gates 183 which OR the output of these comparators to provide a set conflict signal whenever a comparator indicates coincidence of its inputs. Each register 181 provides a validity bit V and its set condition is the same as that of validity bit $T_2V$ of the T2 stage of the pipeline. Namely, if a certain request is invalidated when it moves to $T_2$, there is no need to hold the address of such request in the register 181. The V bit of register 181 is reset when there is desired data in the BS and its access is completed, or when there is no desired data in the BS, and an access is issued for the MSU.

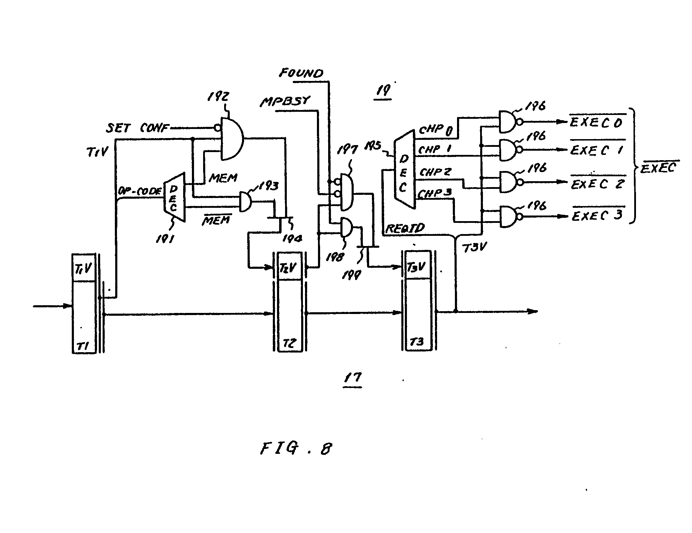

Fig. 8 illustrates in a detail the nullification control circuit 19 of Fig. 2. 191 is a decoder which decodes the operation OP code in the stage $T_1$ of the pipeline and discriminates a memory access request MEM from other requests $\overline{MEM}$ (for example, transfer of control data from CPU to CHP). In the case of a memory access request MEM, $T_2V$ is turned ON under the condition that the there is no set conflict SET CONF and $T_1V$ is ON. A request $\overline{MEM}$ other than a memory access request turns ON $T_2V$ only with the condition of $T_1V$. In addition, when the desired data is FOUND is BS, $T_2V$ can be transferred to $T_3V$, but when it is NOT FOUND in BS, the MSU access is necessary and $T_2V$ is transferred to $T_3V$ under a condition that an MSU port 21 is not busy.

Since there is no probability of nullification in the successive stages of $T_3$, the fact that $T_3V$ is turned ON means that normal processing is possible in the pipeline. On the contrary, when $T_3V$ is turned OFF, the unexecutable signal $\overline{EXEC}$ must be notified to the CHP priority circuit. In this case, the REQ ID in the stage $T_3$ is decoded by the decoder 195, any of $\overline{EXEC}$ 0~3 of the corresponding CHP is output through the gate 196. Here, 192, 193, 197, 198, 196 are AND gates, while 194, 199 are OR gates.

Major access request operations involving the MCU will now be described prior to functions of the main priority determination circuit 16. These major access request operations are:—

ⓐ for access requests from CHP, including 8-byte accesses such as 8-BYTE READ OR WRITE.

ⓑ for access requests from CPU including 8-BYTE STORE, KEY operation, 64-BYTE READ BLOCK FETCH and 64-BYTE WRITE BLOCK STORE.

ⓒ for an access request of the loop back LB generated from MCU including: PREFETCH, where it is checked whether there or not the BLOCK next to the BLOCK accessed from CPU and CHP is in the buffer memory and if it is not found, move-in occurs from the main memory: ERROR LOOP BACK, where an error is detected during processing and loop back occurs for post-processing: STORE LOOP BACK, for updating a BI FLAG indicating whether or not it is necessary to send BIA on the occasion of selecting BIA (BUFFER INVALIDATION ADDRESS) while the 8-BYTE STORE exists in the buffer memory BS: and move-in, move-out for sending and receiving data between buffer memory BS and main memory.

In the case of CPU BLOCK access, the access request appears only once but the priority is obtained for each 8-BYTE access needed to complete the block access. Namely, priority is obtained eight times in total and the processing of 1-BLOCK (64 BYTE) is completed. Therefore, CPU BLOCK access involves basically the same processing as 8-BYTE STORE an 8-BYTE access of CHP and is equivalent to executing 8-BYTE access eight times.

If the assignments of priority to access requests are carefully modified giving consideration to the differences of kind and content of the above operations, more efficient access request processing can be realized. The main priority determination circuit 16 is used for such processing and the algorithm in accordance with which it operates to modify priority assignments is indicated below.

(1) When a first 8-BYTE/one-cycle of BLOCK access from CPU and SCH compete, the higher priority of SCH is kept as it is and is not modified.

(2) When the second and successive BLOCK accesses from CPU (after obtaining priority for the first 8-BYTE/one cycle) and SCH compete, no priority is given to SCH until the priority of 8 times of the BLOCK access of CPU are all removed. Thereby, once started the BLOCK access is quickly completed and a load on the CPU access requests is eased.

(3) The priority of the PREFETCH of loop back is modified so that it is lower than that of SCH, because its urgency is comparatively low. However, PREFETCH priority must be kept higher than CPU priority.

(4) The priority of access of loop back LB (other than the PREFETCH), which is higher than that of SCH and CPU, should not be modified.

(5) When BLOCK accesses compete in the CPU's, the BLOCK access indicated by the H/C value of flag bit 16a has higher priority. Once a BLOCK access obtains priority, no priority is given to other BLOCK accesses until priority is given to all the remaining BLOCK accesses.

In the consideration of access requests competing for priority, requests which cannot obtain priority for reasons other than those concerning the theory of priority (for example, in the case of memory access, those generating confliction of bank on the buffer memory BS with the preceding access request) are not taken into account. Therefore, once priority is obtained, possibility of processing in MCU becomes large.

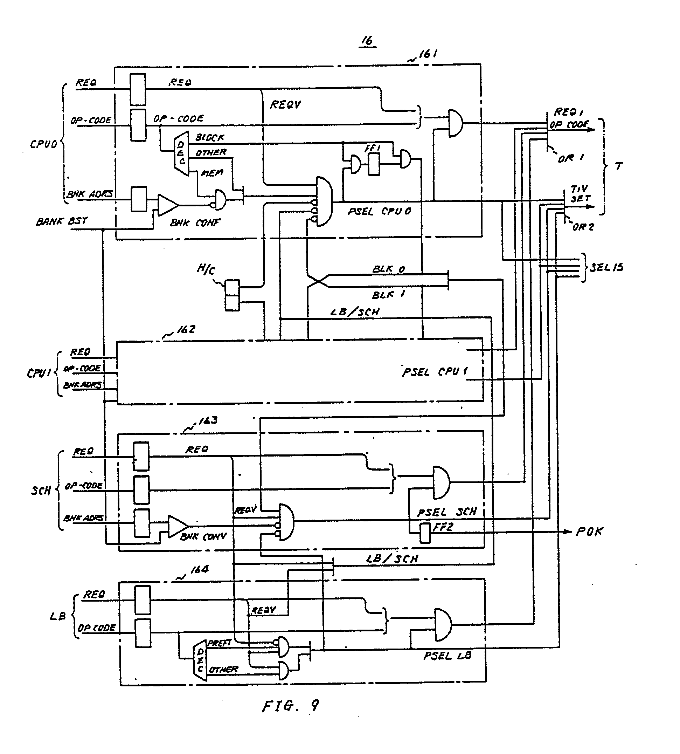

Fig. 9 is a detail block diagram of the main priority determination circuit 16. In Fig. 9, 161 is a control circuit for $CPU_0$. First, the OP code is decoded and block access BLOCK, memory access including block access MEM and other accesses OTHER are identified. In the case of a memory access, bank conflict is checked. Namely, it is checked whether the bank to be accessed is busy or not, using a bank address BNKADRS in the access address and a busy signal BANKBSY of each bank (not shown) of BS. When it is busy (BNK CONF), such access request is not selected. In the case of a memory access without bank conflict or an access request for other than a memory access, when the validity bit REQV of own REQ is ON, the hot and cold flag H/C is OFF, there is no request from loop back or CHP $(\overline{LB/SCH})$ and block access is not being processed in the CPU 1 $(\overline{BLK1})$, the selection signal PSELCPU0 turns ON. When PSELCPU0 turns ON, the REQ signal of CPU0 and OP code are selected and output. Moreover, when this access request is for a block access, FF1 is set by the PSELCPU0 and a signal BLK0 indicating a block access is sent to a circuit 162.

The circuit 162 is a control circuit for CPU1 and its operation is the same as that of the circuit 161 and therfore it is not described. The H/C flag is set when CPU0 accessing is complete and is reset when CPU1 accessing is complete.

The circuit 163 is the control circuit for SCH. Since a CHP allows only 8-byte accesses, the OP code is not decoded. When there is no bank conflict, REQV is ON, there is no loop back selection signal $(\overline{PSELLB})$ and there is no CPU0 or CPU1 block access the selection signal PSELSCH is turned ON. When PSELSCH turns ON, the REQ of SCH and OP code are selected and output, and the signal obtained by delaying PSELSCH by one cycle through FF2 becomes POK.

The circuit 164 is a control circuit for loop back. This circuit identifies a prefetch access and other accesses by decoding an OP code. In the case of a prefetch access, PSELLB turns ON only when REQV of SCH is OFF and REQV of LB is ON. In the case of other accesses, PSELLB turns ON when REQV of LB is ON.

The REQ, OP-CODE outputs from the circuits 161 to 164 are connected to the $T_1$ stage of the pipeline through the OR gate OR1, whilst PSELCPU0, PSELCPU1, PSELSCH, and PSELLB are connected to the $T_1V$ bit of the $T_1$ stage through the OR gate OR2. These four PSEL signals are connected also to the selector 15 and then used for selection control.

As described above, according to an embodiment of the present invention, a CHP access request which has once obtained priority but has lost that priority for some reason is afforded opportunities for re-execution, to realize smoother processing, because it is given a higher priority than that of other CHP access requests in repeated priority determination processes. In addition, priority determination is carried out with careful modification in consideration of the operational contents of or significance of an access request based on the result judged from the point of view of hardware, in place of priority determination from the fixed view point of hardware, and access efficiency as a whole can be improved and moreover a total processing time in the data processing system can also be curtailed.

The present invention relates to access request control apparatus and more specifically to apparatus for determining priority between a plurality of access requests in memory control apparatus. One of the access requests from a plurality of channel processing devices CHP's is selected by a first priority determination circuit, whilst one of said selected CHP request, requests from a plurality of central processing units and loop back requests from a pipeline control circuit is selected by a second priority determination circuit.

If a CHP request is not selected by the second priority determination circuit or selected but nullified in the course of pipeline processing, such a request is returned again to the first priority determination circuit. However, in this case, a higher priority is given to the request when it returns to the first priority determination circuit. In addition, the priority algorithm for the second priority determination circuit considers the kinds of operations involved in each access request and thereby highly efficient memory access can be realized.

**Claims**

1. Access request control apparatus, for controlling access to an access receiving apparatus (MSU) by a plurality of access requesting apparatuses ($CHP_0$ to $CHP_3$, $CPU_0$, $CPU_1$) forming a data processing system, the access request control apparatus comprising:—

means operable to determine priority as between a plurality of access requests simultaneously accepted from the plurality of access requesting apparatuses ($CHP_0$ to $CHP_3$, $CPU_0$, $CPU_1$), to assign priority values, to select only one such access request, and to redetermine priority if processing is disabled before completion by nullifying the priority of the selected access request and by returning it to its initial condition, namely to its condition when it was accepted, which means are further operable to allow such access request which has once been so nullified to take part again in priority determination and for that purpose to assign a higher priority value to such access request for competition with other access requests, characterised in that

the access receiving apparatus is memory apparatus (MSU),

the access requesting apparatuses include units such as channel processing units ($CHP_0$ to $CHP_3$) and central processing units ($CPU_0$, $CPU_1$), and the said means comprise:—

a first priority determination circuit (13) operable to select one CHP access request from two or more competing CHP access requests, and a second priority determination circuit (16) which, when two or more access requests, such as a selected CHP access request and CPU and loop back access requests compete, in general gives:—

as between CPU access requests, higher priority to one request in accordance with a flag bit (H/C) indicating priority as between CPU access requests;

as between the selected CHP access request and CPU access requests, higher priority to the selected CHP access request; and

as between a loop back access request and CHP and CPU access requests, higher priority to the loop back access request;

and wherein if the CHP access request selected by the first priority determination circuit (13) is not selected by the second priority determination circuit (16), a higher priority is given to said CHP access request for subsequent priority determination in the first priority determination circuit (13).

the first priority determination circuit (13) including state indication registers (13a) which indicate the states of the respective CHP's and being operable to determine priority based on the contents of such registers (13a),

each such register (13a, 131, 133, 135) storing a plurality of bits (REQUEST, PORT BUSY, ACCEPTED 0, 1, 2, 3) the values of which are set to states to indicate whether or not an access request from the corresponding CHP has been accepted at a corresponding CHP port (11) of the apparatus, to indicate that the port is busy, and to indicate a priority level for the access request, the priority determination circuits (13, 16) being operable to alter the priority level indication given by the register.

2. Apparatus as claimed in claim 1, wherein in the absence of an access request for a CHP (CHP$_0$ to CHP$_3$) the states of the bits of the corresponding state indication register (13a) assume a first value (000000), when an access request from the CHP is accepted the state of the bits assumes a second value (100000), and if the request is selected in the first priority determination circuit (13) a third value (110110) is assumed, whereas if the request is not selected in the first priority determination circuit (13) a fourth value (110000) is assumed, until the request is eventually so selected, and wherein

when the request has been selected in the first priority determination circuit (13), if it is selected in the second priority determination circuit (16), the bits in the register assume a state of a fifth value (110101), and when the request is executed the state changes to a sixth value (100100), whereafter it is returned to the first or the second value, whereas if the request is not selected in the second priority determination circuit (16) the state changes to a seventh value (111011), indicating a higher priority for the request for a subsequent priority determination in the first priority determination circuit (13)

and when the request is selected in the second priority determination circuit (16) but processing is disabled before completion of execution of the request, the state changes to an eighth value (111010), also indicating a higher priority for the request for a subsequent priority determination in the first priority determination circuit (13).

3. Access request control apparatus, as claimed in claim 1, wherein the second priority determination circuit (16), when two or more access requests, such as a selected CHP access request, CPU access requests, and loop back access requests compete, gives, as a rule:—

as between CPU access requests, higher priority to one request in accordance with a flag bit (H/C) indicating priority as between CPU access requests;

as between the selected CHP access request and CPU access requests, high priority to the selected CHP access request; and

as between a loop back access request and CHP and CPU access requests, higher priority to the loop back access request;

and wherein the second priority determination circuit (16) is operable to modify priority in accordance with the kinds of operation signified by the access requests, so that in relation to a CPU access request involving access of a unit of n-bytes, and a CPU block access request where such an n-byte access has to be effected continuously m times (n, m are integers larger than 1), a higher priority is given to the second and successive such n-byte access requests of a block access request than is given to the first n-byte access request of a block access request or to a single n-byte access request,

block access flags being provided in correspondence to the respective CPU's CPU$_0$, CPU$_1$) in the second priority determination circuit (16), and

when the first n-byte access request of a block access request is selected, the block access flag of the relevant CPU is turned ON indicating that the access request has higher priority than access requests of other CPU's.

**Patentansprüche**

1. Zugriffsanforderungssteuervorrichtung zum Steuern des Zugriffs zu einer einen Zugriff empfangenden Einrichtung (MSU) durch eine Vielzahl von Zugriff anfofdernden Einrichtungen (CHP$_0$ bis CHP$_3$, CPU$_0$, CPU$_1$), die ein Datenverarbeitungssystem bilden, welche Zugriffsanforderungssteuereinrichtung umfaßt:—

Einrichtungen, die betreibbar sind, um eine Priorität unter einer Vielzahl von Zugriffsanforderungen zu bestimmen, welche gleichzeitig von der Vielzahl von Zugriff anfordernden Einrichtungen (CHP$_0$ bis CHP$_3$, CPU$_0$, CPU$_1$) empfangen werden, um Priori-tätswerte zuzuordnen, um lediglich eine solche Zugriffsanforderung auszuwählen und um eine Priorität neu zu bestimmen, falls die Verarbeitung vor Beendigung deaktiviert wird, durch Aufheben der Priorität der ausgewählten Zugriffsanforderung und durch ihre Rückführung in ihren anfänglichen Zustand, nämlich in ihren Zustand, als sie akzeptiert wurde, welche Einrichtungen ferner betreibbar sind, um zu erlauben, daß solche eine Anforderung, welche einmal so aufgehoben wurde, wiederum an der Prioritätsbestimmung teilnehmen kann und zu dem Zweck, um solch einer Zugriffsanforderung für den Wettbewerb mit anderen Zugriffsanforderungen einen höheren Prioritätswert zuzuordnen, dadurch gekennzeichnet, daß

die den Zugriff empfangende Einrichtung eine Speichereinrichtung (MSU) ist,

die Zugriff anfordernden Einrichtungen solche Einheiten wie Kanalverarbeitungseinheiten (CHP$_0$ bis CHP$_3$) und zentrale Verarbeitungseinheiten (CPU$_0$, CPU$_1$) umfassen,

und daß die genannten Einrichtungen umfassen:—

eine erste Prioritätsbestimmungsschaltung (13), die betreibbar ist, um eine CHP-Zugriffsanforderung von zwei oder mehr in Wettbewerb stehenden CHP-Zugriffsanforderungen auszuwählen, und eine zweite Prioritätsbestimmungsschaltung (16), die, wenn zwei oder mehr Zugriffsanforderungen miteinander im Wettbewerb stehen, wie eine ausgewählte CHP-Zugriffsanforderung und CPU und Rückschleifen-Zugriffsanforderungen, im allgemeinen vergibt:—

zwischen CPU-Zugriffsanforderungen, eine höhere Priorität an eine Anforderung im Übereinstimmung mit einem Kennzeichenbit (H/C), welches die Priorität zwischen den CPU-Zugriffsanforderungen anzeigt;

zwischen den ausgewählten CHP-Zugriffsanforderungen und CPU-Zugriffsanforderungen, eine höhere Priorität an die ausgewählte CHP-Zugriffsanforderung; und

zwischen einer Rückschleifen-Zugriffsanforderung und CHP- und CPU-Zugriffsanforderungen, eine höhere Priorität an die Rückschleifen-Zugriffsanforderung;

und bei der dann, wenn die CHP-Zugriffsanforderung, die durch eine erste Prioritätsbestimmungsschaltung (13) ausgewählt wurde, nicht durch die zweite Prioritätsbestimmungsschaltung (16) ausgewählt wird, eine höhere Priorität der genannten CHP-Zugriffsanforderung für die folgende Prioritätsbestimmung in der ersten Prioritätsbestimmungsschaltung (13) gegeben wird,

die erste Prioritätsbestimmungsschaltung (13) ein Zustandsanzeigeregister (13a) enthält, welches die Zustände der jeweiligen CHPs anzeigt und betreibbar ist, um, basierend auf den Inhalten solcher Register (13a), die Priorität zu bestimmen,

jedes solcher Register (13a, 131, 133, 135) eine Vielzahl von Bits (REQUEST, PORT BUSY, ACCEPTED 0, 1, 2, 3) speichert, deren Werte auf Zustände gesetzt werden, um anzuzeigen, ob eine Zugriffsanforderung von der entsprechenden CHP an einen entsprechenden CHP-Port (11) der Einrichtung akzeptiert worden ist oder nicht, um anzuzeigen, daß der Port belegt ist, und um einen Prioritätspegel für die Zugriffsanforderung anzuzeigen, die Prioritätsbestimmungsschaltungen (13, 16) betreiebbar sind, um die Prioritätspegelanzeige, die von dem Register gegeben wird, zu ändern.

2. Vorrichtung nach Anspruch 1, bei der in Abwesenheit einer Zugriffsanforderung von einer CHP (CHP₀ bis CHP₃) die Zustände der Bits des entsprechenden Zustandsanzeigeregisters (13a) einen ersten Wert (000000) annehmen, wenn eine Zugriffsanforderung von der CHP angenommen worden ist, der Zustand der Bits einen zweiten Wert (100000) annimmt, und, falls die Anforderung in der ersten Prioritätsbestimmungsschaltung (13) ausgewählt wurde, ein dritter Wert (110110) angenommen wird, wohingegen dann, falls die Anforderungen nicht in der ersten Prioritätsbestimmungsschaltung (13) ausgewählt wird, ein vierter Wert (110000) angenommen wird, bis die Anforderung schließlich so ausgewählt ist.

und bei der wenn die Anfordernung in der ersten Prioritätsbestimmungsschaltung (13) ausgewählt worden ist, dann, falls sie in der zweiten Prioritätsbestimmungsschaltung (16) ausgewählt wird, die Bits in dem Register einen Zustand eines fünften Wertes (110101) annehmen, und dann, wenn die Anforderung ausgeführt wird, der Zustand sich zu einen sechsten Wert (100100) ändert, woraufhin er zu dem ersten oder zweiten Wert zurückgeführt wird, wohingegen dann, falls die Anforderung nicht in der zweiten Prioritätsbestimmungsschaltung (16) ausgewählt wird, der Zustand sich zu einem siebten Wert (111011) ändert, der eine höhere Priorität für die Anforderung einer folgenden Prioritätsbestimmung in der ersten Prioritätsbestimmungsschaltung (13) anzeigt,

und dann, wenn die Anforderung in der zweiten Prioritätsbestimmungsschaltung (16) ausgewählt wird, die Verarbeitung jedoch vor Beendigung der Ausführung der Anforderung deaktiviert wird, der Zustand sich zu einem achten Wert (111010) ändert, der ebenfalls eine höhere Priorität für die Anforderung für eine nachfolgende Prioritätsbestimmung in der ersten Prioritätsbestimmungsschaltung (13) anzeigt.

3. Zugriffsanforderungssteuervorrichtung nach Anspruch 1, bei der die zweite Prioritätsbestimmungsschaltung (16) dann, wenn zwei oder mehr Zugriffsanforderungen, wie z.B. eine ausgewählte CHP-Zugriffsanforderung, CPU-Zugriffsanforderungen und Rückschleifen-Zugriffsanfordernungen, in Weetbewerb stehen, regelmäßig vergibt:—

zwischen CPU-Zugriffsanforderungen, eine höhere Priorität an einer Anforderung in Übereinstimmung mit einem Kennzeichenbit (H/C), welches Priorität zwischen CPU-Zugriffen anzeigt;

zwischen der ausgewählten CHP-Zugriffsanforderung und CPU-Zugriffsanforderungen, eine höhere Priorität an eine ausgewählte CHP-Zugriffsanforderung; und

zwischen einer Rückschleifen-Zugriffsanforderung und CHP- und CPU-Zugriffsanforderungen, eine höhere Priorität an die Rückschleifenzugriffsanforderung;

und bei der die zweite Prioritätsbestimmungsschaltung (16) betreibbar ist, um die Priorität in Übereinstimmung mit den Arten des Betriebes zu modifizieren, die durch die Zugriffsanforderungen gekennzeichnet sind, so daß die in Relation zu einer CPU-Zugriffsanforderung, die einen Zugriff zu einer Einheit von n Bytes einschließt, und einer CPU-Blockzugriffsanforderung, bei der solche ein n-Byte-Zugriff m Male kontinuierlich bewirkt werden muß (n, m sind ganze Zahle größer als 1), eine höhere Priorität der zweiten und den folgenden solcher n-Byte-Zugriffsanforderungen von einer Blockzugriffsanforderung gegeben wird, als sie an die erste n-Byte-Zugriffsanforderung einer Blockzugriffsanforderung oder an eine einzelne n-Byte-Zugriffsanforderung vergeben wird.

Blockzugriffskennzeichen in Übereinstimmung mit jeweiligen CPUs (CPU₀, CPU₁) in der zweiten Prioritätsbestimmungsschaltung (16) vergeben werden, und

wenn die erste n-Byte-Zugriffsanforderung von einer Blockzugriffsanforderung ausgewählt ist, das Blockzugriffskennzeichen der relevanten CPU auf EIN geschaltet wird, was anzeigt, daß die Zugriffsanforderung eine höhere Priorität als die Zugriffsanforderung der anderen CPUs hat.

**Revendications**

1. Dispositif de contrôle de demandes d'accès, pour contrôler l'accès à un dispositif récepteur d'accès (MSU) par un ensemble de dispositifs demandeurs d'accès (CHP$_0$ à CHP$_3$, CPU$_0$, CPU$_1$) constituant un système de traitement de données, le dispositif de contrôle de demandes d'accès comprenant:

des moyens pouvant être mis en fonctionnement pour déterminer la priorité entre un ensemble de demandes d'accès acceptées simultanément provenant de l'ensemble de dispositifs demandeurs d'accès (CHP$_0$ à CHP$_3$, CPU$_0$, CPU$_1$), pour affecter des valeurs de priorité, pour ne sélectionner que cette demande d'accès, et pour rédéterminer la priorité si le traitement est invalidé avec la fin en annulant la priorité de la demande d'accès sélectionnée et en la mettant à son état initial, c'est-à-dire à son état quand elle a été acceptée, ces moyens pouvant en outre être mis en fonctionnement pour permettre à la demande d'accès qui a été ainsi annulée une fois de refaire partie de la détermination de priorité et, à cette fin, pour affecter une plus haute valeur de priorité à cette demande d'accès pour une mise en concurrence avec les autres demandes d'accès, caractérisé en ce que

le dispositif récepteur d'accès est un dispositif de mémoire (MSU),

les dispositifs demandeurs d'accès comprennent des unités telles que des unités de traitement de canaux (CHP$_0$ à CHP$_3$) et des unités centrales de traitement (CPU$_0$, CPU$_1$),

et en ce que lesdits moyens comprennent:

un premier circuit de détermination de priorité (13) pouvant être mis en fonctionnement pour sélectionner une demande d'accès de CHP parmi deux demandes d'accès de CHP en concurrence ou plus, et un deuxième circuit de détermination de priorité (16) qui, lorsqu'il y a deux demandes d'accès ou plus, telles qu'une demande d'accès de CHP sélectionnée et des demandes d'accès de CPU et de boucle en retour, qui sont en concurrence, donne en général:

entre des demandes d'accès de CPU, une plus haute priorité à une demande selon un bit indicateur (H/C) indiquant la priorité entre des demandes d'accès de CPU;

entre la demande d'accès de CHP sélectionnée et des demandes d'accès de CPU, une plus haute priorité à la demande d'accès de CHP sélectionnée; et

entre une demande d'accès de boucle en retour et des demandes d'accès de CHP et de CPU, une plus haute priorité à la demande d'accès de boucle en retour;

et dans lequel, si la demande d'accès de CHP sélectionnée par le premier circuit de détermination de priorité (13) n'est pas sélectionnée par le deuxième circuit de détermination de priorité (16), une plus haute priorité est donnée à la demande d'accès de CHP pour une détermination suivante de priorité dans le premier circuit de détermination de priorité (13),

le premier circuit de détermination de priorité (13) incluant des registres d'indication d'état (13a) qui indiquent les états des unités CHP respectives et pouvant être mis en fonctionnement pour déterminer la priorité selon les contenus de ces registres (13a),

chaque registre (13a, 131, 133, 135) mémorisant un ensemble de bits (DEMANDE, PORTE D'ACCES OCCUPEE, 0, 1, 2, 3 ACCEPTEE) dont les valeurs sont mises à des états pour indiquer si une demande d'accès provenant de l'unité CHP correspondante a été ou non acceptée à une porte d'accès de CHP (11) correspondante du dispositif, pour indiquer que la porte d'accès est occupée, et pour indiquer un niveau de priorité pour la demande d'accès, les circuits de détermination de priorite (13, 16) pouvant être mis en fonctionnement pour modifier l'indication de niveau de priorité donnée par le registre.

2. Dispositif selon la revendication 1, dans lequel en l'absence d'une demande d'accès provenant d'une unité CHP (CHP$_0$ à CHP$_3$), les états des bits du registre d'indication d'état (13a) correspondant prennent une première valeur (000000), quand une demande d'accès provenant de l'unité CHP est acceptée, l'état des bits prend une deuxième valeur (100000), et si la demande est sélectionnée dans le premier circuit de détermination de priorité (13), une troisième valeur (110110) est prise, alors que, si la demande n'est pas sélectionnée dans le premier circuit de détermination de priorité (13), une quatrième valeur (110000) est prise, jusqu'à ce que la demande soit finalement ainsi sélectionnée, et dans lequel

quand la demande a été sélectionnée dans le premier circuit de détermination de priorité (13), si elle est sélectionnée dans le deuxième circuit de détermination de priorité (16), les bits contenus dans le registre prennent un état d'une cinquième valeur (110101), et, quand la demande est exécutée, l'état passe à une sixième valeur (100100), après quoi elle est remise à la première ou à la deuxième valeur, alors que, si la demande n'est pas sélectionnée dans le deuxième circuit de détermination de priorité (16), l'état passe à une septième valeur (111011), indiquant une plus haute priorité pour la demande pour une détermination suivant de priorité dans le premier circuit de détermination de priorité (13)

et, quand la demande est sélectionnée dans le deuxième circuit de détermination de priorité (16) mais que le traitement est invalidé avant la fin de l'exécution de la demande, l'état passe à une huitième valeur (111010), indiquant également une plus haute priorité pour la demande pour une détermination suivante de priorité dans le premier circuit de détermination de priorité (13).

3. Dispositif de contrôle de demandes d'accès, selon la revendication 1, dans lequel le deuxième circuit de détermination de priorité (16) donne, comme règle, quand deux demandes d'accès ou plus, telles qu'une demande d'accès de CHP sélectionnée, des demandes d'accès de CPU, et des demandes d'accès de boucle en retour sont en concurrence:

entre des demandes d'accès de CPU, une plus haute priorité à une demande selon un bit indicateur (H/C) indiquant la priorité entre des demandes d'accès de CPU;

entre la demande d'accès de CHP sélectionnée et des demandes d'accès de CPU, une haute priorité à la demande d'accès de CHP sélectionnée; et

entre une demande d'accès de boucle en retour et des demand'accès de CHP et de CPU, une plus haute priorité à la demande d'accès de boucle en retour;

et dans lequel le deuxième circuit de détermination de priorité (16) peut être mis en fonctionnement pour modifier la priorité selon les types d'opérations indiqués par les demandes d'accès, de sorte qu'en rapport avec une demande d'accès de CPU impliquant un accès d'une unité de n multiplets, et une demande d'accès à un bloc de CPU dans laquelle un accès à n multiplets doit être effectué de façon continue m fois (n, m étant des entiers supérieurs à 1), une plus haute priorité est donnée à la deuxième demande d'accès et aux demandes d'accès à n multiplets successives d'une demande d'accès à un bloc que celle qui est donnée à la première demande d'accès à n multiplets d'une demande d'accès à un bloc ou à une seule demande d'accès à n multiplets,

des indicateurs d'accès à un bloc étant fournis en correspondance avec les unités CPU ($CPU_0$, $CPU_1$) respectives dans le deuxième circuit de détermination de priorité (16), et

quand la première demande d'accès à n multiplets d'une demande d'accès à un bloc est sélectionnée, l'indicateur d'accès à un bloc de l'unité CPU concernée est établi en indiquant que la demande d'accès a une plus haute priorité que les demandes d'accès des autres unités CPU.

FIG. 1

FIG. 2.

FIG. 3

FIG. 4

3

FIG. 5

FIG. 6

FIG. 7

FIG. 8

FIG. 9